## Europäisches Patentamt

## European Patent Office

## Office européen des brevets

(19)

(11) Veröffentlichungsnummer: **0 174 609**
**B1**

(12) **EUROPÄISCHE PATENTSCHRIFT**

(45) Veröffentlichungstag der Patentschrift: **07.11.90**

(51) Int. Cl.⁵: **B 23 K 9/02**, B 23 K 9/16

(21) Anmeldenummer: **85111226.8**

(22) Anmeldetag: **05.09.85**

(54) Vorrichtung zum Zuführen von Wurzelschutzgas beim Rohrschweissen.

(30) Priorität: **13.09.84 DE 3433599**

(43) Veröffentlichungstag der Anmeldung:
**19.03.86 Patentblatt 86/12**

(45) Bekanntmachung des Hinweises auf die
Patenterteilung:
**07.11.90 Patentblatt 90/45**

(84) Benannte Vertragsstaaten:
**DE**

(56) Entgegenhaltungen:
**EP-A-0 116 687**
**DE-A-1 934 107**
**US-A-2 433 296**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Hermes, Hans
Am Falder 65
D-4000 Düsseldorf 13 (DE)**
Erfinder: **Meissner, Henning
Am Seeblick 12
D-4000 Düsseldorf 12 (DE)**

Courier Press, Leamington Spa, England.

# EP 0 174 609 B1

**Beschreibung**

Die Erfindung richtet sich auf eine Vorrichtung zum Zuführen von Wurzelschutzgas an die Nahtstelle zweier zu verschweißender rohrförmiger Körper, bestehend aus einen Schutzgasraum abtrennenden Scheiben und einem zwischen diesen angeordneten Hohlkörper aus zumindest teilweise porösem Material, insbesondere Sintermetall, mit daran anschließbarer Schutzgaszuführung.

Wenn Umgebungs luft durch den Fügespalt beim Rohrschweißen angesaugt wird, können durch Anlauffarben gekennzeichnete Oxidschichten entstehen, die sich negativ auf die Korrosionsbeständigkeit des Werkstoffs auswirken. Um das zu verhindern, wird die Wurzel des Fügespalts mit Schutzgas beaufschlagt. Bei nach außen geöffneter V-Naht wird auf der Rohrinnenseite eine Schutzgaskammer vorgesehen. Die Kammer kann auf der einen Seite durch eine Drosselscheibe und auf der anderen Seite durch ein Absperrsystem begrenzt sein und Mittel zum Zuführen des Schutzgases besitzen. Durch Abstimmen der Drosselscheibe mit der Menge des zugeführten Schutzgases kann ein Schutzgasüberdruck in der Schutzgaskammer eingestellt werden.

In der Praxis wird der Schutzgasstrom entweder zentral oder über nachzustellende Segmente in die durch das Absperrsystem und die Drosselscheibe bzw. Stauscheibe gebildete Schutzgaskammer eingeleitet. Dadurch wird das Ansaugen atmosphärischer Luft durch den Fügespalt aber nur unvollständig verhindert.

Um dies vermeiden, ist in der EP—A—0116687 die eingangs genannte Vorrichtung vorgeschlagen worden. Diese bekannte Ausführungsform weist bei achszentraler Anordnung des porösen Hohlkörpers aber den Nachteil auf, daß eine randnahe Schutzgasströmung an der Innenseite der zu verschweißenden Rohrflächen im Bereich der Schweißnaht nicht gewährleistet ist. Sie weist bei randnaher Anordnung von porösem Material mit zentraler Schutzgaszuführung weiterhin den Nachteil auf, daß ein gleichmäßig über die Querschnittsfläche des porösen Materials verteilter Schutzgasaustritt auf die Schweißwurzel nicht sichergestellt ist.

Aufgabe der Erfindung ist es, eine Vorrichtung der eingangs genannten Art dahingehend zu verbessern, daß ein gleichmäßiger Schutzgasaustritt aus dem Hohlkörper gewährleistet ist und ein Schutzgasschleier dicht und turbulenzarm an den Schweißnahtwurzelbereich herangeführt wird.

Diese Aufgabe wird bei einer Vorrichtung der eingangs genannten Art dadurch gelöst, daß die eine Scheibe eine Lochscheibe ist und die andere Scheibe eine den Innenraum des Hohlkörpers dichtend verschließende Seitenwand bildet, in welcher auf der dem Schutzgasraum abgewandten Außenseite eine mehrarmige Schutzgaszuführung mündet, daß der Außendurchmesser des Hohlkörpers das ungefähr 0,8-fache bis ungefähr 0,9-fache des lichten Durchmessers des rohrförmigen Körpers beträgt und daß der Innenraum des Hohlkörpers durch wenigstens zwei gasdurchlässige Zwischenwände in entsprechend viele Zwischenkammern unterteilt ist.

Mit der Erfindung wird eine Vorrichtung geschaffen, bei der in dem porösem Hohlkörpers aufgrund der mehrarmigen Schutzgaszuführung und der in dem Hohlkörper angeordneten Zwischenwände eine Vergleichmäßigung des Schutzgasstromes erzielt wird, welcher dann gleichmäßig durch den porösen Hohlkörper in den Schutzgasraum austritt und dabei turbulenzarm und dicht an den Schweißnahtwurzelbereich herangeführt wird. Hiermit wird eine für die Schweißbelange im Sinne einer randnahen Schutzgasströmung an der Schweißnahtwurzel sowie einer gleichmäßigen Gasverteilung im Schutzgasraum optimale Strömungsgestaltung erreicht.

Weitere Vorteile ergeben sich aus den Unteransprüchen.

Besonders zweckmäßig ist es gemäß weiterer Erfindung, einen Dichtring zwischen Hohlkörper und angrenzender Rohrinnenfläche vorzusehen, da hierdurch vor allem auch eine Ansaugen atmosphärischer Luft durch den Ringspalt am Umfang des Hohlkörpers vermieden wird.

Anhand der schematischen Darstellung eines Ausführungsbeispiels werden Einzelheiten der Erfindung erläutert. Es zeigen:

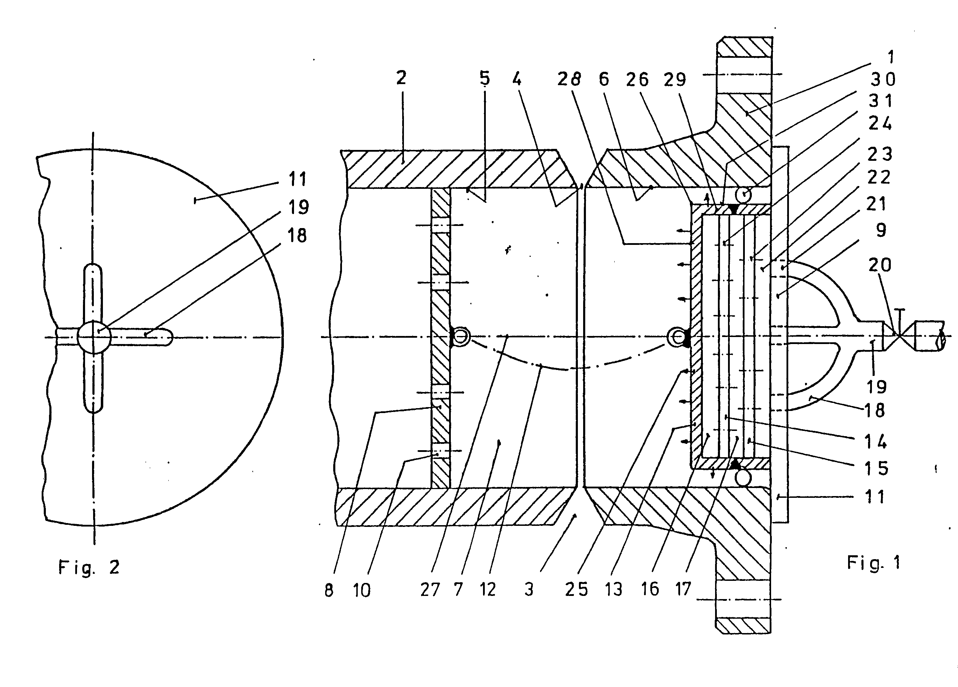

Fig. 1 einen Querschnitt parallel zur Längsachse des zu schweißenden Rohrs; und

Fig. 2 die Draufsicht auf die Außenseite eines als Brause ausgebildeten Absperrsystems.

In dem in der Zeichnung dargestellten Ausführungsbeispiel ist vorgesehen, einen Rohrflansch 1 an ein Ende eines Rohrs 2 stumpf anzuschweißen. Der Schweißstoß wird durch eine V-förmige, um das Rohr umlaufende Fügenaht 3 gebildet. In der dargestellten Anordnung geht es darum, die Wurzel 4 der Fügenaht 3 mindestens bis zum Auftragen der (nicht gezeichneten) Wurzellage der zu erzeugenden Schweißnaht von der Rohrinnenfläche 5 bzw. Flanschinnenfläche 6 her mit einem Schutzgas, dem sogenannten Wurzelschutzgas, gleichmäßig so zu beaufschlagen, daß beim Schweißen atmosphärische Luft durch den Fügespalt 3 nicht angesaugt werden kann. Um das zu erreichen, wird innerhalb des Rohrs 2 bzw. Flansches 1 ein Schutzgasraum 7 mit einer Stauscheibe bzw. Drosselscheibe 8 auf der einen Seite der Fügenaht 3 und einem als Brause 9 ausgebildeten Absperrsystem auf der anderen Seite der Fügenaht 3 gebildet.

Die Drosselscheibe 8 soll eine geweise Zahl von Bohrungen 10 besitzen, deren summierter Querschnitt so groß gewählt wird, daß innerhalb des Schutzgasraums 7 ein geringer Überdruck zu erzeugen und aufrecht zu erhalten ist, wenn eine entsprechende Menge Schutzgas pro Leiteinheit eingeleitet wird.

Das als Brause 9 ausgebildete Absperrsystem befindet sich im Ausführungsbeispiel am Außenende des Rohrstutzens 1, verschließt diesen und liegt an der Flanschfläche mit einer ein Widerlager bildenden Anlagescheibe 11 an. Wenn zwei Rohre erfindungsgemäß zusammenzuschweissen sind, ist die Konstruktion der Brause entsprechend zu verändern. Beispielsweise kann die Anlagescheibe 11 durch ein radial zu expandierendes Klemm-Mittel ersetzt werden. Die Brause 9 und die Drosselscheibe 8 können über eine Kette 12 minteinander gekoppelt sein.

Die Brause 9 selbst besteht aus einem dem Schutzgasraum 7 zugewandten, die eigentliche Brausefläche enthaltenden, porösen äußeren Gehäuse 13, zwei durch Zwischenwände 14, und 15 voneinander getrennte Kammern 16 und 17 und einer durch die Anlagescheibe 11 mit mehreren Armen 18 hindurchgeführten Schutzgaszuführung 19 mit Absperrventil 20. Die Arme 18 werden durch Bohrungen 21 der Anlagescheibe 11 geführt und münden in einer Vorkammer 22. Das in die Vorkammer 22 bei geöffnetem Ventil 20 über die Schutzgaszuführung 19 eingeleitete Schutzgas gelangt durch gegeneinander versetzte Löcher 23 und 24 bzw. durch Poren der Zwischenwände 14 und 15 nacheinander in die Zwischenkammern 17 und 16 und wird schließlich durch das poröse äußere Gehäuse 13 in der durch die Pfeile 25 angedeuteten Weise als laminare Strömung in den Schutzgasraum 7 eingeleitet.

Die erstrebte Strömungsform kann noch besser angenähert werden, wenn sich der poröse, insbesondere aus Sintermetall, bestehende Bereich des äußeren Gehäuses 13 der Brause 9 über die umlaufende Kante 26 der senkrecht zur Rohrlängsachse 27 angeordneten bzw. im wesentlichen radial verlaufenden Hauptbrausefläche 28 hinwegerstreckt und einen porösen Brauserandstreifen 29, durch den das Schutzgas in radialer Richtung 30 geblasen wird, umfaßt. Voraussetzung dafür ist u.a., daß der Durchmesser des Gehäuses 13 kleiner als der lichte Durchmesser des umgebenden Flansches 1 bzw. Rohrs 2 ist. In Frage kommt ein Verhältnis des Brausen-Durchmessers zum lichten Rohrdurchmesser von 0,8/1,0 bis 0,9/1,0 in Frage Um schließlich eine Durchströmung des zwischen Brausen-Umfang und Rohrinnenfläche gebildeten Spalts auszuschließen, kann es zweckmäßig sein, den Spalt nach aussen hin, d.h. angrenzend an die Anlagescheibe 11 mit einem zusätzlichen Dicht-Ring 21, insbesondere O-Ring, abzudichten.

Bezugszeichenliste

1 = Rohrflansch
2 = Rohr
3 = Fügenaht
4 = Wurzel
5 = Rohrinnenfläche
6 = Flanschinnenfläche
7 = Schutzgasraum
8 = Drosselscheibe
9 = Brause
10 = Loch
11 = Anlagescheibe
12 = Kette
13 = äußeres Gehäuse
14 = Zwischenwand
15 = Zwischenwand
16 = Kammer
17 = Kammer
18 = Arm
19 = Schutzgaszuführung
20 = Ventil
21 = Bohrung
22 = Vorkammer
23 = Loch (15)
24 = Loch (14)
25 = Pfeil
26 = Umfangskante
27 = Rohrlängsachse
28 = Hauptbrausefläche
29 = Randstreifen
30 = radiale Richtung
31 = O-Ring

**Patentansprüche**

1. Vorrichtung zum Zuführen von Wurzelschutzgas an die Nahtstelle zweier zu verschweißender rohrförmiger Körper (1, 2), bestehend aus einen Schutzgasraum (7) abtrennenden Scheiben (8, 11) und einem zwischen diesen angeordneten Hohlkörper (13) aus zumindest teilweise porösem Material, insbesondere Sintermetall, mit daran anschließbarer Schutzgaszuführung (19), dadurch gekennzeichnet, daß die eine Scheibe eine Lochscheibe (8) ist und die andere Scheibe (11) eine den Innenraum des Hohlkörpers (13) dichtend verschließende Seitenwand bildet, in welche auf der dem Schutzgasraum (7) abgewandten Außenseite eine mehrarmige Schutzgaszuführung (18, 19) mündet, daß der Außendurchmesser des Hohlkörpers (13) das ungefähr 0,8-fache bis ungefähr 0,9-fache des lichten Durchmessers des rohrförmigen Körpers (1) beträgt und daß der Innenraum des Hohlkörpers (13) durch wenigstens zwei gasdurchlässige Zwischenwände (14, 15) in entsprechend viele Zwischenkammern (16, 17) unterteilt ist.

2. Vorrichtung nach Anspruch 1, dadurch gekennzeichnet, daß die Zwischenwände (14, 15) aus porösem Werkstoff und/oder aus Lochblech, vorzugsweise mit Lochdurchmessern zwischen 1 und 1,5 mm bestehen.

3. Vorrichtung nach Anspruch 2, dadurch gekennzeichnet, daß der poröse Werkstoff ein Sintermetall ist.

4. Vorrichtung nach einem der vorangehenden Ansprüche, gekennzeichnet durch einen Dichtring (31) zwischen Hohlkörper (13) und angrenzender Rohr innenfläche.

5. Vorrichtung nach einem der vorangehenden Ansprüche, gekennzeichnet durch eine Kopplung, insbesondere als Verbindungskette (12) zwischen Hohlkörper (13) Drosselscheibe (8) und ein an den Hohlkörper (13) angesetztes Widerlager (11) für die Kopplung.

6. Vorrichtung nach Anspruch 5, dadurch gekennzeichnet, daß das Widerlager als auf die Außenseite eines anzuschweißenden Rohrflansches (1) aufzusetzende Anlagescheibe (11) ausgebildet ist.

7. Vorrichtung nach einem der vorangehenden Ansprüche, dadurch gekennzeichnet, daß sich die gasdurchlässig-poröse Fläche des Hohlkörpers (13) über die Umfangskante (26) seiner senkrecht zur Rohrlängsachse (27) stehenden Fläche (28) hinweg in einen porösen Seitenwandstreifen (29) erstreckt.

## Revendications

1. Dispositif d'amenée de gas protecteur à l'emplacement de soudage entre deux corps tubulaires (1, 2) à réunir par soudure, comprenant des disques (8, 11) séparant un espace (7) à gaz protecteur et un corps creux (13), situé entre ces disques, constitué en matière au moins partiellement poreuse, notamment en métal fritté, et pourvu d'un raccord d'amenée (19) de gaz protecteur, dispositif caractérisé par le fait que l'un des disques est un disque ajouré (8) et que l'autre disque (11) constitue une paroi latérale fermant de façon étanche la chambre interne du corps creux (13), le raccord d'amenée (18, 19) de gaz inerte comportant des branches multiples débouchant sur la face extéreure de la paroi latérale (11) située du côté opposé à l'espace (7) à gaz inerte; que le diamètre extérieur du corps creux (13) mesure de 0,8 à 0,9 fois environ le diamètre intérieur du corps tubulaire (1); et que l'espace intérieur du corps creux (13) est divisé par au moins deux parois intermédiaires (14, 15) perméables au gaz et fournissant un nombre correspondant de chambres intermédiaires (16, 17).

2. Dispositif selon la revendication 1, caractérisé par le fait que les parois intermédiaires (14, 15) sont constituées en une matière poreuse et/ou en tôle perforée ayant, de préférence, des trous de diamètres compris entre 1 et 1,5 mm.

3. Dispositif selon la revendication 2, caractérisé par le fait que la matière poreuse est un métal fritté.

4. Dispositif selon l'une quelconque des revendications 1 à 3, caractérisé par le fait qu'il est pourvu d'un joint d'étanchéité (31) situé entre le corps creux (13) et la paroi intérieure du tube contiguë.

5. Dispositif selon l'une quelconque des revendications 1 à 4, caractérisé par le fait qu'il comporte un accouplement constitué, notamment, par une chaîne de liaison (12) entre le corps creux (13) et le disque d'étranglement (8), et une butée fixée sur le corps creux (13) pour l'accouplement.

6. Dispositif selon l'une quelconque des revendications 1 à 5, caractérisé par le fait que la butée est réalisée sous forme d'un disque (11) à placer sur la face extérieure de la bride d'un tuyau (1) à souder.

7. Dispositif selon l'une quelconque des revendications 1 à 6, caractérisé par le fait que la face poreuse et perméable au gaz du corps creux (13) s'étend au-dessus du bord périphérique (26) de sa face (28) perpendiculaire par rapport à l'axe longitudinal du tube (27) suivant une bande de paroi latérale poreuse (29).

## Claims

1. Device for the feed of root protection gas to the seam location of two tubular bodies (1, 2) to be welded together, the device consisting of discs (8, 11) separating a protective gas space (7) and a hollow body (13), which is arranged between these and of at least partially porous metal, in particular sintered metal, with a protective gas feed (19) connectable thereto, characterised thereby, that the one disc is a perforated disc (8) and the other disc (11) forms a side wall, which sealingly closes off the internal space of the hollow body (13) and into which opens a multi-armed protective gas feed (18, 19) on the outer side remote from the protective gas space (7), that the outside diameter of the hollow body (13) amounts approximately to 0.8 to 0.9 times the clear diameter of the tubular diameter of the tubular body (1) and the internal space of the hollow body (13) is subdivided by at least two intermediate walls (14, 15), which are permeable to gas, into correspondingly many intermediate chambers (16, 17).

2. Device according to claim 1, characterised thereby, that the intermediate walls (14, 15) consist of a porous material and/or of perforated sheet metal, preferably with hole diameters of between 1 and 1.5 millimetres.

3. Device according to claim 2, characterised thereby, that the porous material is a sintered metal.

4. Device according to one of the preceding claims, characterised by a sealing ring (31) between the hollow body (13) and the adjacent internal tube surface.

5. Device according to one of the preceding claims, characterised by a coupling, in particular as connecting chain (12), between the hollow body (13) and the throttle disc (8) and a counterbearing (11), which is placed against the hollow body (13), for the coupling.

6. Device according to claim 5, characterised thereby that the counterbearing is constructed as a contact disc (11) to be placed onto the outside of a tube flange (1) to be welded on.

7. Device according to one of the preceding claims, characterised thereby, that the porously gas-permeable surface of the hollow body (13) extends beyond the circumferential edge (26) of its surface (28) standing perpendicularly to the longitudinal tube axis (27) into a porous side wall strip (29).

Fig. 2

Fig. 1

EP 0 174 609 B1